# EUROPEAN PATENT APPLICATION

(11) **EP 3 855 032 A1**
(43) Date of publication of application: **28.07.2021**
(21) Application number: 20210901.3
(22) Date of filing: 01.12.2020
(51) Int. Cl.: F16C 9/02, F16C 9/04, F16C 33/04, F16C 33/20

(54) **SLIDING BEARING**

(30) Priority: 24.01.2020 JP 2020009597
(71) Applicant: Toyota Jidosha Kabushiki Kaisha, Aichi-ken, 471-8571 (JP)
(72) Inventor: MANABE, Kazuyoshi, Aichi-ken, 471-8571 (JP)
(74) Representative: J A Kemp LLP

(57) **Abstract**

The present disclosure provides a vehicle power transmission mechanism including a drive source, a drive wheel, and a drive system that transmits power generated by the drive source to the drive wheel. The vehicle power transmission mechanism includes at least one coating portion (111) provided on at least one region selected from a contact portion between components constituting the vehicle power transmission mechanism and a periphery of the contact portion. The coating portion (111) contains at least a binder resin and a thermoplastic elastomer.

## Description

### BACKGROUND OF THE INVENTION

### 1. Field of the Invention

The present disclosure relates to a vehicle power transmission mechanism.

### 2. Description of Related Art

Vehicle noise is generated mainly from a drive source such as an engine or a drive system, and includes sounds in various frequency bands. Regulations on levels of noise generated from vehicles are being strengthened every year.

Countermeasures against the vehicle noise have been taken so far through measures such as developing a cover material for reducing noise from a transmission. For example, Japanese Unexamined Patent Publication No. 2010-223313 (JP 2010-223313 A) discloses a sound absorbing cover for reducing noise from a power transmission device that transmits power from a power generation source to a drive shaft via a transmission mechanism that is disposed in a transmission case and that is connected to the power generation source of a vehicle, for the purpose of providing a sound absorbing cover that has a high sound absorbing coefficient and that can further reduce the noise from the power transmission device. The sound absorbing cover includes a cover body that is configured as a frame-shaped body having at least one opening and that is fixed to the transmission case, and a sound absorbing material fixed to the cover body so as to close the opening.

### SUMMARY OF THE INVENTION

JP 2010-223313 A discloses a cover material, but such a cover material is used to reduce noise by absorbing or insulating sound. However, in order to reduce the noise, it is desired not only to reduce the noise by sound absorption or sound insulation but also to reduce the amount of noise itself generated from a noise generation source. If the amount of noise generated from the noise generation source can be reduced, the noise can be further reduced.

Therefore, the present disclosure provides a vehicle power transmission mechanism that can reduce the amount of noise generated from a noise generation source.

An aspect of the present disclosure is described as follows.

An aspect of the present disclosure provides a vehicle power transmission mechanism including a drive source, a drive wheel, and a drive system that transmits power generated by the drive source to the drive wheel. The vehicle power transmission mechanism includes at least one coating portion provided on at least one region selected from a contact portion between components constituting the vehicle power transmission mechanism and a periphery of the contact portion. The coating portion contains at least a binder resin and a thermoplastic elastomer. In the above aspect, the binder resin may contain at least one type selected from a group consisting of a polyamide-based resin, a polyimide-based resin, and a polyamideimide-based resin. In the above aspect, the binder resin may contain a polyamideimide-based resin. In the above aspect, the thermoplastic elastomer may contain at least one type selected from a group consisting of a polystyrene-based thermoplastic elastomer, a polyolefin-based thermoplastic elastomer, a vinyl chloride-based thermoplastic elastomer, a urethane-based thermoplastic elastomer, and an ester-based thermoplastic elastomer. A content of the thermoplastic elastomer may be 10% by volume or more and 70% by volume or less when a total amount of the binder resin and the thermoplastic elastomer is 100% by volume. In the above aspect, the coating portion may be a coating film. In the above aspect, a thickness of the coating film may be 10 µm or more and 1000 µm or less. In the above aspect, the contact portion may be selected from a sliding portion, a fitting portion, an engaging portion, a connecting portion, a meshing portion, and a contact surface portion. In the above aspect, the drive source may include an engine. In the above aspect, the coating portion may be provided on at least one region of the engine, the at least one region being selected from: a sliding portion between a piston and a piston pin; a sliding portion between the piston pin and a connecting rod; a sliding portion between the connecting rod and a crankshaft; a sliding portion between the connecting rod and a connecting rod bearing, and a rear surface of the connecting rod bearing; a sliding portion between the crankshaft and a crankshaft bearing, and a rear surface of the crankshaft bearing; a mating surface of a cylinder head and a cylinder block; a mating surface of the cylinder block and a crankcase; a mating surface of the crankcase and an oil pan; and a contact surface between a fuel injection valve and the cylinder block. In the above aspect, the drive system may include a transmission. In the above aspect, the coating portion may be provided on at least one region of the transmission, the at least one region being selected from: a fitting portion between a rolling bearing and a shaft; a fitting portion between a rolling bearing and a case; and a spline coupling portion.

According to the present disclosure, a vehicle power transmission mechanism that can reduce the amount of noise generated from a noise generation source can be provided.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic sectional view showing a configuration example of an engine 1 according to an embodiment;
FIG. 2 is a schematic view showing a piston, a crankshaft, a connecting rod, and the like;
FIG. 3A is a schematic sectional view showing a configuration example of a split bearing member which is a half piece of a plain bearing interposed between the crankshaft and the connecting rod;
FIG. 3B is a schematic sectional view showing a configuration example of a split bearing member which is a half piece of the plain bearing interposed between the crankshaft and the connecting rod; and
FIG. 4 is a schematic view showing a configuration of a falling ball test machine 200 used in a falling ball test.

### DETAILED DESCRIPTION OF EMBODIMENTS

The present embodiment relates to a vehicle power transmission mechanism including a drive source, a drive wheel, and a drive system that transmits power generated by the drive source to the drive wheel. The vehicle power transmission mechanism includes at least one coating portion in at least one region selected from a contact portion between components constituting the vehicle power transmission mechanism and the periphery thereof, and the coating portion contains at least a binder resin and a thermoplastic elastomer.

According to the present embodiment, a vehicle power transmission mechanism that can reduce the amount of noise generated from a noise generation source can be provided. Specifically, in the present embodiment, the coating portion containing at least the binder resin and the thermoplastic elastomer is provided at the contact portion between the components constituting the vehicle power transmission mechanism and the periphery thereof. The contact portion between the components constituting the vehicle power transmission mechanism is a noise generation source, and the amount of noise generated can be reduced by providing the coating portion according to the present embodiment at the contact portion and the periphery thereof. It is assumed that the effect of reducing the amount of noise generated is obtained for the following reasons. There are slight gaps that are barely visible to the naked eye between the components of the vehicle power transmission mechanism, and the components repeatedly contact/collide with each other together with movement for transmitting power. In the vehicle power transmission mechanism, the components vibrate due to the contact/collision between the components, and noise is generated due to the vibration. In the present embodiment, by providing the coating portion on the contact portion between the components and the periphery thereof, the thermoplastic elastomer contained in the coating portion absorbs the vibration generated by the contact/collision between the components, allowing generation of noise to be reduced. It should be noted that the above assumption does not limit the present disclosure.

Hereinafter, the present embodiment will be described in detail.

### 1. Coating Portion

The coating portion in the present embodiment contains at least a binder resin and a thermoplastic elastomer. Since the thermoplastic elastomer contained in the coating portion absorbs the vibration generated by the contact/collision between the components, the generation of noise can be reduced.

The coating portion is provided on at least one region selected from the contact portion between the components constituting the vehicle power transmission mechanism and the periphery thereof.

In the present specification, the "contact portion between components and the periphery thereof' literally means the portion where the components contact each other and the periphery of the contact portion, and the "periphery" means a proximity region of a contact portion capable of exhibiting a noise generation reducing effect, which is an effect of the present embodiment. When the component has a plate shape (including a flat plate, a curved plate, etc.), the "periphery" also encompasses the surface on the opposite side of the component from the contact portion (also referred to as "rear surface"). Those skilled in the art can determine whether there is a noise generation reducing effect by an appropriate method such as comparing the noise generation levels in cases with and without the coating portion. The coating portion may be provided on one of the contacting components or both of them.

In an embodiment, the coating portion is provided on the contact portion between the components. In other words, the coating portion serves as the contact portion between the components. In this case, the contact/collision between the components can be directly mitigated, and the generation of noise can be effectively suppressed.

In another embodiment, the coating portion is provided in the periphery of the contact portion between the components and not on the contact portion between the components. In this case, it is possible to suppress the generation of noise while suppressing abrasion of the coating portion.

Examples of the contact portion between the components include a sliding portion, a fitting portion, an engaging portion, a connecting portion, a meshing portion, and a contact surface portion in the vehicle power transmission mechanism.

The coating portion is preferably a coating film that covers the component. The thickness of the coating film is, for example, 10 µm or more and 1000 µm or less, preferably 20 µm or more and 900 µm or less, preferably 30 µm or more and 800 µm or less, preferably 40 µm or more and 700 µm or less, and preferably 50 µm or more and 600 µm or less.

The binder resin is not particularly limited, and examples thereof include a polyamide-based resin, a polyimide-based resin, a polyamideimide-based resin, a phenol-based resin, an epoxy-based resin, a polyether sulfone-based resin, a polyphenylene sulfide-based resin, or a mixture thereof. Among them, the binder resin is preferably a polyamide-based resin, a polyimide-based resin, a polyamideimide-based resin, or a mixture thereof, from the viewpoint of heat resistance and abrasion resistance. The binder resin is preferably a heat resistant resin, and the heat resistant resin has a heat deformation temperature of 100°C or higher, preferably 150°C or higher. One type of the binder resin may be used singly, or two or more types thereof may be used in combination.

The thermoplastic elastomer is not particularly limited. Since the thermoplastic elastomer absorbs the vibration generated by the contact/collision between the components, the generation of noise can be reduced. It is assumed that the thermoplastic elastomer converts vibration energy into heat energy, and thus can absorb the vibration. Examples of the thermoplastic elastomer include a polystyrene-based thermoplastic elastomer, a polyolefin-based thermoplastic elastomer, a vinyl chloride-based thermoplastic elastomer, a urethane-based thermoplastic elastomer, an ester-based thermoplastic elastomer, a polyamide-based thermoplastic elastomer, and a polybutadiene-based thermoplastic elastomer, or a mixture thereof. The thermoplastic elastomer is preferably a polystyrene-based thermoplastic elastomer, a polyolefin-based thermoplastic elastomer, a vinyl chloride-based thermoplastic elastomer, a urethane-based thermoplastic elastomer, an ester-based thermoplastic elastomer, or a mixture thereof. One type of the thermoplastic elastomer may be used singly, or two or more types thereof may be used in combination.

The content of the thermoplastic elastomer is, for example, 10% by volume or more and 70% by volume or less, preferably 20% by volume or more and 60% by volume or less, and preferably 30% by volume or more and 50% by volume or less, when the total amount of the binder resin and the thermoplastic elastomer is 100% by volume. When the content of the thermoplastic elastomer is 10% by volume or more, the noise reducing effect of the thermoplastic elastomer can be effectively obtained. Further, when the content of the thermoplastic elastomer is 70% by volume or less, the abrasion resistance of the coating portion can be easily adjusted to an appropriate range. The total amount of the binder resin and the thermoplastic elastomer contained in the coating portion is preferably 80% by volume or more, and more preferably 90% by volume or more.

In addition to the binder resin and the thermoplastic elastomer, the coating portion may contain an additive if necessary. The additive is added to improve properties required of the coating portion, for example, to impart abrasion resistance, seizure resistance and/or low friction properties of the coating portion. The additive is not particularly limited, but examples thereof include hard particles, a solid lubricant, a fiber reinforcing agent, or a mixture thereof. Examples of hard particles include alumina, silicon dioxide, aluminum nitride, or a mixture thereof. Examples of a solid lubricant include molybdenum sulfide (MoS₂), graphite, boron nitride, or a mixture thereof. Examples of a fiber reinforcing agent include carbon fiber, aramid fiber, potassium titanate fiber, or a mixture thereof. One type of the additive may be used singly, or two or more types thereof may be used in combination.

The coating portion is not particularly limited. For example, the coating portion can be provided by applying a coating solution containing a binder resin, a thermoplastic elastomer, a solvent, and an additive if necessary to the contact portion of the component or the periphery thereof.

The method for applying the coating solution is not particularly limited, and examples thereof include spray coating, roll coating, spin coating, screen coating, and curtain coating.

The type of solvent can be appropriately selected according to the types of the binder resin and the thermoplastic elastomer that are used. For example, when a polyamideimide-based resin is used as the binder resin, N-methyl-2-pyrrolidone (NMP), N-ethylpyrrolidone (NEP), 1,3-dimethyl-2-imidazolidinone (DMI), γ-butyl lactone (GBL), or a mixture thereof can be used as the solvent. Further, for example, when an epoxy-based resin is used as the binder resin, methyl ethyl ketone (MEK), toluene, or a mixture thereof can be used as the solvent. One type of the solvent may be used singly, or two or more types thereof may be used in combination.

After applying the coating solution, a drying treatment and/or a curing treatment can be performed if necessary.

### 2. Vehicle Power Transmission Mechanism

The vehicle power transmission mechanism according to the present embodiment includes the drive source, the drive wheel, and the drive system that transmits the power generated by the drive source to the drive wheel.

A vehicle travels by transmitting the power generated by the drive source to the drive wheel through the drive system including a transmission and the like. An example of the drive source is an engine. The drive system includes, for example, in a front-engine rear-wheel drive vehicle (FR vehicle), a clutch, a transmission, a transfer, a propeller shaft, a differential, and an axle. Further, in an automatic transmission (AT) vehicle, an automatic transmission is used instead of a clutch and a transmission for a manual transmission (MT). As a general description, the clutch is used for connecting and disconnecting power, and performs a starting operation at the time of starting the vehicle and a power disconnection at the time of gear change. The MT performs switching between forward/backward movement and switching between low/high gear stages. The propeller shaft is a power transmission shaft that connects the transmission and the differential, and generally absorbs a sprung displacement and an unsprung displacement. The differential performs final deceleration, 90-degree turning of the rotating shaft, and differential rotation of the right and left wheels. The axle drives wheels and tires.

The arrangement position of the coating portion according to the present embodiment is not particularly limited as long as it is at least one region selected from the contact portion between the components constituting the vehicle power transmission mechanism including the drive source, the drive wheel, and the drive system that transmits the power generated by the drive source to the drive wheel, and the periphery thereof. Examples of the contact portion between the components include a sliding portion, a fitting portion, an engaging portion, a connecting portion, a meshing portion, and a contact surface portion in the vehicle power transmission mechanism. There are slight gaps that are barely visible to the naked eye in the contact portion between the components, and the components repeatedly contact and collide with each other together with the movement for transmitting the power. The components vibrate due to the contact/collision between the components, and noise is generated due to the vibration. In the present embodiment, the coating portion described above is provided on the contact portion between the components or the periphery thereof. Since the thermoplastic elastomer contained in the coating portion absorbs the vibration generated by the contact/collision between the components, the amount of generated noise can be reduced.

A sliding portion is preferably used as the contact portion between the components. The sliding portion is a portion where the components slide and move while rubbing against each other, and is a main generation source of noise. The components that constitute the sliding portion are described as sliding members. Examples of the sliding portion include a sliding portion between a shaft and a bearing. The coating portion may be provided on the shaft, the bearing, or both the shaft and the bearing. When the bearing has a plate shape, the coating portion may be provided on the surface on the opposite side of the bearing from the sliding portion. Specific examples of the sliding portion include a sliding portion between a piston and a piston pin, a sliding portion between a piston pin and a connecting rod, a sliding portion between a connecting rod and a crankshaft, a sliding portion between a connecting rod and a connecting rod bearing, and a sliding portion between a crankshaft and a crankshaft bearing.

As described above, the arrangement position of the coating portion according to the present embodiment is not particularly limited as long as it is at least one region selected from the contact portion between the components constituting the vehicle power transmission mechanism including the drive source, the drive wheel, and the drive system that transmits the power generated by the drive source to the drive wheel, and the periphery thereof. However, in the following description, in order to describe specific embodiments, the arrangement position of the coating portion will be exemplified using an engine as an example of the drive source.

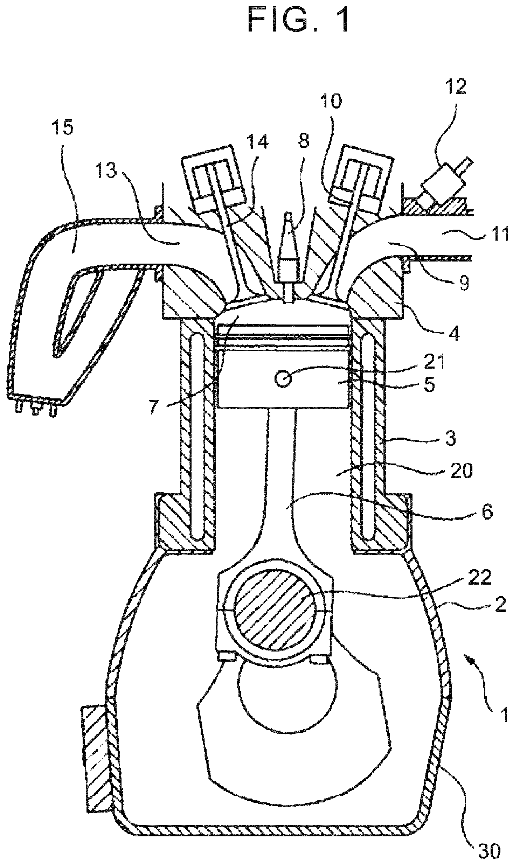

FIG. 1 is a schematic sectional view showing a configuration example of an engine 1 according to the present embodiment. The engine 1 is a gasoline engine. The engine 1 is mounted on the vehicle.

The engine 1 includes a crankcase 2, a cylinder block 3, a cylinder head 4, a piston 5, a connecting rod 6 and an oil pan 30. The cylinder block 3 is arranged above the crankcase 2, and the oil pan 30 is arranged below the crankcase 2. The cylinder head 4 is arranged above the cylinder block 3. The oil pan 30 stores oil. The oil supplied from the oil pan 30 to the lubrication portions of the engine 1 and the like is collected in the oil pan 30 again.

A plurality of (for example, four) cylinders 20 are provided in the cylinder block 3, and the piston 5 and the connecting rod 6 are provided in each cylinder 20. The piston 5 reciprocates up and down in the cylinder 20. A combustion chamber 7 in which a mixture of fuel and air burns is defined by the cylinder block 3, the cylinder head 4, and the piston 5.

The connecting rod 6 is connected to the piston 5 via a piston pin 21 at its small diameter end, and is connected to the crankshaft 22 at its large diameter end. The connecting rod 6 connects the piston 5 to the crankshaft 22 and converts a linear movement of the piston 5 into a rotational movement of the crankshaft 22.

The cylinder head 4 is provided with an ignition plug 8 that ignites the air-fuel mixture in the combustion chamber 7. An intake port 9 through which intake gas flows is provided in the cylinder head 4. The intake port 9 is provided with an intake valve 10 that opens and closes the intake port 9. An intake manifold 11 is connected to the intake port 9. The intake manifold 11 is provided with a fuel injection valve 12 that injects fuel into the intake port 9.

An exhaust port 13 through which exhaust gas flows is provided in the cylinder head 4. The exhaust port 13 is provided with an exhaust valve 14 that opens and closes the exhaust port 13. An exhaust manifold 15 is connected to the exhaust port 13.

The configuration of the engine 1 is not limited to the configuration shown in FIG. 1. For example, the fuel injection valve 12 may be arranged to inject fuel directly into the cylinder 20. Further, the engine 1 may be another type of engine such as a diesel engine. Further, the engine 1 may be covered with a cover material.

As shown in FIG. 1, the engine is composed of many components. As described above, the arrangement position of the coating portion is at least one region selected from the contact portion between the components and the periphery thereof. Specific examples of the contact portion include sliding portions such as a sliding portion between the piston 5 and the piston pin 21, a sliding portion between the piston pin 21 and the connecting rod 6, a sliding portion between the connecting rod 6 and the crankshaft 22, a sliding portion between the connecting rod 6 and the connecting rod bearing, and a sliding portion between the crankshaft 22 and the crankshaft bearing. Further, specific examples of the contact portion include a mating surface of the cylinder head 4 and the cylinder block 3, a mating surface of the cylinder block 3 and the crankcase 2, a mating surface of the crankcase 2 and the oil pan 30, a contact surface between the fuel injection valve 12 and the cylinder block 3.

Further, an example other than the engine includes a transmission included in the drive system. Examples of the contact portion in the transmission include a fitting portion between various rolling bearings and a shaft, a fitting portion between various rolling bearings and a case, and a spline coupling portion.

Hereinafter, an example of the arrangement position of the coating portion will be described using a connecting rod bearing as an example of the sliding member.

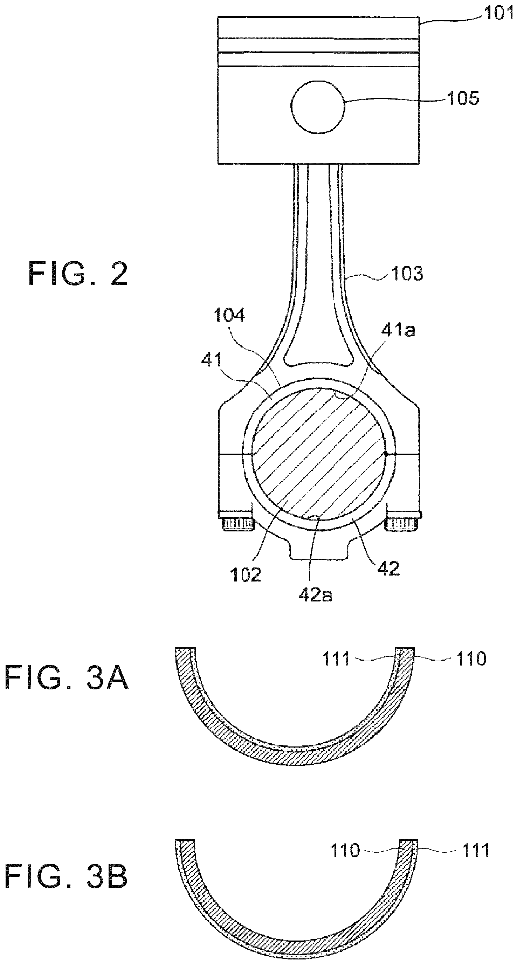

FIG. 2 is a schematic view showing a piston 101, a crankshaft 102, a connecting rod 103 and the like. FIGS. 3A and 3B are schematic sectional views showing configuration examples of a split bearing member (41 or 42 in FIG. 2) which is a half piece of a plain bearing interposed between the crankshaft 102 and the connecting rod 103. As shown in FIG. 2, the piston 101 and the upper end of the connecting rod 103 are connected by a piston pin 105. The lower end of the connecting rod 103 is connected to the crankshaft 102 via a plain bearing 104 (connecting rod bearing).

The plain bearing 104 has a two split structure and is composed of two split bearing members 41, 42. Each of the split bearing members 41, 42 has a semi-cylindrical shape, and a pair of the upper and lower split bearing members 41, 42 is interposed between the crankshaft 102 and the connecting rod 103.

In an embodiment, sliding surfaces 41a, 42a (surfaces on which the crankshaft 102 slides) of the split bearing members 41, 42 serve as the contact portions, and the coating portion according to the present embodiment is provided on these portions or the periphery thereof.

In FIGS. 3A and 3B, the plain bearing includes a main plate 110 and a coating portion 111 provided on the main plate 110. In the plain bearing of FIG. 3A, the coating portion 111 is provided on the surface of the main plate 110, that is, the surface on the crankshaft 102 side. In the plain bearing of FIG. 3B, the coating portion 111 is provided on the rear surface of the main plate 110, that is, the surface on the connecting rod 103 side. The thermoplastic elastomer contained in the coating portion 111 absorbs the vibration generated by the contact/collision between the components, so that the generation of noise can be reduced.

The material of the main plate 110 is not particularly limited, but for example, an iron-based plate material, a copper-based plate material, or an aluminum-based plate material can be used. Examples of the iron-based plate material include a cold rolled special steel strip, a cold rolled steel strip, a cold rolled stainless steel strip, and a metal-coated steel sheet. Examples of the cold rolled special steel strip include razor steel, carbon tool steel, alloy tool steel, carbon steel, and chrome molybdenum steel. Examples of the cold rolled steel strip include a cold rolled steel sheet and strip in coil and a soft magnetic iron. Examples of the cold rolled stainless steel strip include an austenite-based material, a martensite-based material, and a precipitation hardening-based material. Examples of the metal-coated steel sheet include a hot-dip galvanized steel sheet, a copper-plated steel sheet, and a nickel-plated steel sheet. Examples of a copper-based material include brass, phosphor bronze, beryllium copper, and nickel silver. Examples of an aluminum-based material include aluminum alloys such as duralumin.

The thickness of the main plate is not particularly limited, but is, for example, 0.1 mm to 5.0 mm.

FIGS. 3A and 3B show a plain bearing composed of two semi-cylindrical split bearing members. However, the shape of the bearing is not particularly limited, and may have, for example, a bush shape, a washer shape, or a plate shape.

As described above, the sliding member according to the present embodiment includes the main plate and the coating portion of the present embodiment provided on the main plate. In the sliding member according to the present embodiment, the thermoplastic elastomer contained in the coating portion absorbs the vibration generated by the contact/collision between the components, so that the generation of noise can be reduced.

The present embodiment will be described below with reference to Examples, but the present disclosure is not limited to these Examples.

### Example 1

### Preparation of Coating Solution

A polyamideimide-based resin (trade name: HPC5000, manufactured by Hitachi Chemical Co., Ltd.) serving as a binder resin was dissolved in N-ethyl-2-pyrrolidone serving as an organic solvent. Next, HYBRAR (trade name: HYBRAR 5127, polystyrene-based thermoplastic elastomer manufactured by Kuraray Co., Ltd.) serving as a thermoplastic elastomer was added to the mixed solution, and the mixture was kneaded with a kneader for one hour to obtain a coating solution E1. The addition amount of the thermoplastic elastomer was 10% by volume when the total amount of the binder resin and the thermoplastic elastomer was 100% by volume.

### Formation of Coating Portion

Next, the obtained coating solution E1 was applied to the surface of the main plate (SUS440C, dimensions: 30 mm length × 30 mm width × 5 mm thickness) by spray coating. After coating, the main plate was baked at 180°C for 90 minutes to form a coating portion (film thickness: about 100 µm), and a test piece E1 was thus obtained.

### Evaluation: Noise Reduction Characteristics

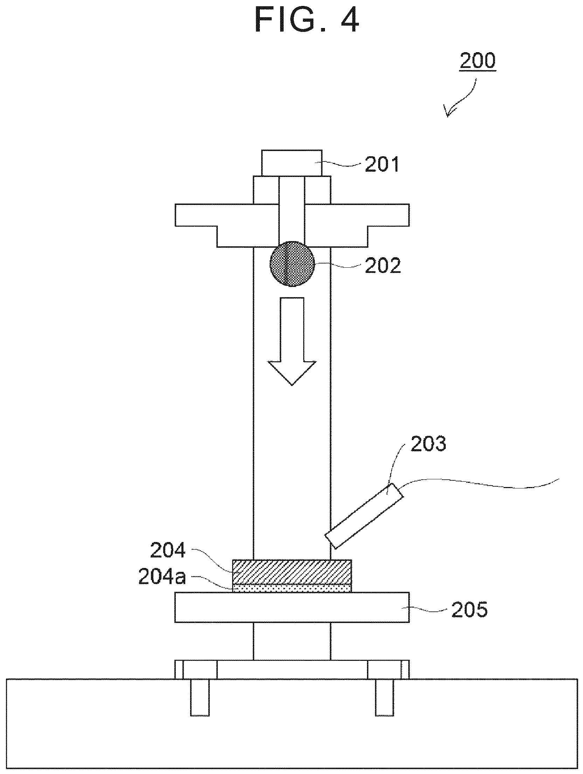

The noise reduction characteristics of the obtained test piece were evaluated by the following falling ball test. FIG. 4 is a schematic view showing a configuration of a falling ball test machine 200 used in the falling ball test. The falling ball test machine 200 of FIG. 4 includes a test body support portion 205 that supports a test piece 204, and a hard sphere support portion 201 that supports a steel ball. The hard sphere support portion 201 is configured to be capable of supporting and dropping a hard sphere (ϕ10 mm, SUJ2) 202 by an electromagnet, and holds the hard sphere 202 at a predetermined height. The distance between the surface of the test piece 204 and the hard sphere 202 is 10 cm. The test piece 204 is disposed so that a coating portion 204a is on the lower side (the test body support portion 205 side). The hard sphere 202 collides with the test piece 204 after being dropped. The noise generated when the hard sphere 202 collides with the test piece 204 is collected by a microphone 203 installed directly above the test piece 204, and the sound pressure is measured. With the falling ball test, it is possible to estimate the level of the reduced noise when the coating portion is provided on the contact portion between the components or the periphery thereof.

Table 1 shows the results of the sound pressure measured in the above falling ball test.

### Examples 2 to 7

Test pieces E2 to E7 were prepared and the noise reduction characteristics were evaluated in the same manner as in Example 1 except that the addition amount of the thermoplastic elastomer was 20% by volume, 40% by volume, 60% by volume, 70% by volume, 80% by volume, and 90% by volume, respectively. The results are shown in Table 1.

### Comparative Example 1

The noise reduction characteristics were evaluated in the same manner as in Example 1 except that the main plate (SUS440C, dimensions: 30 mm length × 30 mm width × 5 mm thickness) was used as a test piece C1. That is, in Comparative Example 1, the sound pressure of the main plate having no coating portion was measured. The results are shown in Table 1.

### Comparative Example 2

A test piece C2 was prepared and the noise reduction characteristics were evaluated in the same manner as in Example 1 except that the thermoplastic elastomer was not added. The results are shown in Table 1.

**Table 1**

| | Binder resin | Thermoplastic elastomer | Film thickness (µm) | Addition amount (volume%) | Sound pressure (dB) |
|---|---|---|---|---|---|
| Comparative Example 1 | - | Not added | 100 | - | 92.3 |
| Comparative Example 2 | PAI | Not added | 100 | - | 91.8 |
| Example 1 | PAI | Added | 100 | 10 | 86.5 |
| Example 2 | PAI | Added | 100 | 20 | 84.2 |
| Example 3 | PAI | Added | 100 | 40 | 80.8 |
| Example 4 | PAI | Added | 100 | 60 | 79.9 |
| Example 5 | PAI | Added | 100 | 70 | 79.0 |
| Example 6 | PAI | Added | 100 | 80 | 79.1 |
| Example 7 | PAI | Added | 100 | 90 | 78.9 |

From the results of Examples 2 to 7, the sound pressure decreases as the addition amount of the thermoplastic elastomer increases, and the noise reducing effect of adding the thermoplastic elastomer can be confirmed.

In the following Examples, the noise reducing effect using other types of the thermoplastic elastomer was examined.

### Example 8

A test piece E8 was prepared and the noise reduction characteristics were evaluated in the same manner as in Example 3 except that EXCELINK1200B (trade name, olefin-based thermoplastic elastomer manufactured by JSR Corporation) was used as the thermoplastic elastomer. The results are shown in Table 2.

### Example 9

A test piece E9 was prepared and the noise reduction characteristics were evaluated in the same manner as in Example 3 except that Rheomer G G5070K (trade name, a vinyl chloride thermoplastic elastomer manufactured by PLAS-TECH CORPORATION) was used as the thermoplastic elastomer. The results are shown in Table 2.

### Example 10

A test piece E10 was prepared and the noise reduction characteristics were evaluated in the same manner as in Example 3 except that Elastollan (trade name, urethane-based thermoplastic elastomer manufactured by BASF) was used as the thermoplastic elastomer. The results are shown in Table 2.

### Example 11

A test piece E11 was prepared and the noise reduction characteristics were evaluated in the same manner as in Example 3 except that KOPEL KP3340 (trade name, ester-based thermoplastic elastomer manufactured by KOLON PLASTICS, INC.) was used as the thermoplastic elastomer. The results are shown in Table 2.

Table 2 also shows the results of Example 3 for reference.

**Table 2**

| | Binder resin | Thermoplastic elastomer | Film thickness (µm) | Addition amount (volume%) | Sound pressure (dB) |
|---|---|---|---|---|---|
| Example 3 | PAI | HYBRAR | 100 | 40 | 80.8 |
| Example 8 | PAI | EXCELINK1200B | 100 | 40 | 81.5 |
| Example 9 | PAI | Rheomer G G5070K | 100 | 40 | 82.3 |
| Example 10 | PAI | Elastollan | 100 | 40 | 80.3 |
| Example 11 | PAI | KOPEL KP3340 | 100 | 40 | 80.5 |

In Examples 3 and 8 to 11, the noise reducing effect was confirmed in all the thermoplastic elastomers, and it was thus confirmed that the noise reducing effect can be obtained with any thermoplastic elastomer.

In the following Examples, the noise reducing effect using other film thicknesses of the thermoplastic elastomer was examined.

### Examples 12 to 15

Test pieces E12 to E15 were prepared and the noise reduction characteristics were evaluated in the same manner as in Example 3 except that the film thicknesses of the coating portions were 10 µm, 20 µm, 50 µm, and 200 µm, respectively. The results are shown in Table 3. Table 3 also shows the results of Example 3 for reference.

**Table 3**

| | Binder resin | Thermoplastic elastomer | Film thickness (µm) | Addition amount (volume%) | Sound pressure (dB) |
|---|---|---|---|---|---|
| Example 12 | PAI | Added | 10 | 40 | 86.8 |
| Example 13 | PAI | Added | 20 | 40 | 83.5 |
| Example 14 | PAI | Added | 50 | 40 | 82.1 |
| Example 3 | PAI | Added | 100 | 40 | 80.8 |
| Example 15 | PAI | Added | 200 | 40 | 79.9 |

In Examples 3 and 12 to 15, it was confirmed that the noise reducing effect increased as the film thickness of the coating portion increased.

The above results proved that, with the present embodiment, a vehicle power transmission mechanism that can reduce the amount of noise generated from a noise generation source can be provided.

The upper limit value and/or the lower limit value of the numerical range described in the present specification can be combined with each other as desired to define a preferable range. For example, the upper limit value and the lower limit value of the numerical range can be combined as desired to define a preferable range, the upper limit values of the numerical range can be combined as desired to define a preferable range, and the lower limit values of the numerical range can be combined as desired to define a preferable range.

Although the present embodiment has been described in detail above, the specific configuration is not limited to the present embodiment, and design changes made without departing from the scope of the present disclosure are encompassed in the present disclosure.

## Claims

1. A vehicle power transmission mechanism including a drive source, a drive wheel, and a drive system that transmits power generated by the drive source to the drive wheel, the vehicle power transmission mechanism comprising at least one coating portion (111) provided on at least one region selected from a contact portion between components constituting the vehicle power transmission mechanism and a periphery of the contact portion, wherein the coating portion (111) contains at least a binder resin and a thermoplastic elastomer.

2. The vehicle power transmission mechanism according to claim 1, wherein the binder resin contains at least one type selected from a group consisting of a polyamide-based resin, a polyimide-based resin, and a polyamideimide-based resin.

3. The vehicle power transmission mechanism according to claim 1, wherein the binder resin contains a polyamideimide-based resin.

4. The vehicle power transmission mechanism according to any one of claims 1 to 3, wherein the thermoplastic elastomer contains at least one type selected from a group consisting of a polystyrene-based thermoplastic elastomer, a polyolefin-based thermoplastic elastomer, a vinyl chloride-based thermoplastic elastomer, a urethane-based thermoplastic elastomer, and an ester-based thermoplastic elastomer.

5. The vehicle power transmission mechanism according to any one of claims 1 to 4, wherein a content of the thermoplastic elastomer is 10% by volume or more and 70% by volume or less when a total amount of the binder resin and the thermoplastic elastomer is 100% by volume.

6. The vehicle power transmission mechanism according to any one of claims 1 to 5, wherein the coating portion (111) is a coating film.

7. The vehicle power transmission mechanism according to claim 6, wherein a thickness of the coating film is 10 µm or more and 1000 µm or less.

8. The vehicle power transmission mechanism according to any one of claims 1 to 7, wherein the contact portion is selected from a sliding portion, a fitting portion, an engaging portion, a connecting portion, a meshing portion, and a contact surface portion.

9. The vehicle power transmission mechanism according to any one of claims 1 to 8, wherein the drive source includes an engine (1).

10. The vehicle power transmission mechanism according to claim 9, wherein the coating portion (111) is provided on at least one region of the engine (1), the at least one region being selected from:
a sliding portion between a piston (101) and a piston pin (105);
a sliding portion between the piston pin (105) and a connecting rod (103);
a sliding portion between the connecting rod (103) and a crankshaft (102);
a sliding portion between the connecting rod (103) and a connecting rod bearing, and a rear surface of the connecting rod bearing;
a sliding portion between the crankshaft (102) and a crankshaft bearing, and a rear surface of the crankshaft bearing;
a mating surface of a cylinder head (4) and a cylinder block (3);
a mating surface of the cylinder block (3) and a crankcase (2);
a mating surface of the crankcase (2) and an oil pan (30); and
a contact surface between a fuel injection valve (12) and the cylinder block (3).

11. The vehicle power transmission mechanism according to any one of claims 1 to 10, wherein the drive system includes a transmission.

12. The vehicle power transmission mechanism according to claim 11, wherein the coating portion (111) is provided on at least one region of the transmission, the at least one region being selected from:
a fitting portion between a rolling bearing and a shaft;
a fitting portion between a rolling bearing and a case; and
a spline coupling portion.
